# EUROPEAN PATENT APPLICATION

(11) **EP 4 431 317 A1**
(43) Date of publication of application: **18.09.2024**
(21) Application number: 22892673.9
(22) Date of filing: 01.11.2022
(51) Int. Cl.: B60G 11/04, B60G 11/10, F16F 1/18, F16F 1/22, F16F 15/073

(54) **LEAF SPRING DEVICE**

(30) Priority: 11.11.2021 JP 2021183979
(71) Applicant: NHK Spring Co., Ltd., Yokohama-shi, Kanagawa 236-0004 (JP)
(72) Inventor: TANAKA Yusuke, Yokohama-shi, Kanagawa 236-0004 (JP); HAYASHI Takanori, Yokohama-shi, Kanagawa 236-0004 (JP); IINO Shinji, Yokohama-shi, Kanagawa 236-0004 (JP); SANO Takamichi, Yokohama-shi, Kanagawa 236-0004 (JP)
(74) Representative: V.O.
(86) International application number: PCT/JP2022/040877
(87) International publication number: WO 2023/085174

(57) **Abstract**

A leaf spring device (1) includes a leaf spring main body (11), a first eye portion (12), a second eye portion provided (13), and a connection piece (14), the first eye portion is connected to a vehicle body (B1) to be rotatable around a first axis (01) extending in a width direction of the leaf spring main body, the second eye portion is connected to the connection piece to be rotatable around a second axis (O2) extending in the width direction, a central region of the leaf spring main body in the longitudinal direction supports an axle, the leaf spring main body is provided to be flexibly deformable upward, and a connection portion (11a) of the leaf spring main body, at which the leaf spring main body is connected to the second eye portion, is urged by an elastic restoring force of the connection piece in a direction (x 1) in which the connection portion is displaced along the longitudinal direction at an initial stage of a process in which the leaf spring main body is flexibly deformed upward.

## Description

### [Technical Field]

The present invention relates to a leaf spring device.

Priority is claimed on Japanese Patent Application No. 2021-183979, filed November 11, 2021, the content of which is incorporated herein by reference.

### [Background Art]

In the related art, for example, as shown in Patent Document 1 below, a leaf spring device that includes a leaf spring main body, a first eye portion and a second eye portion that are provided at both end portions of the leaf spring main body in a longitudinal direction, and a connection piece that connects the second eye portion and a vehicle body is known. The first eye portion is connected to the vehicle body to be rotatable around a first axis extending in a width direction of the leaf spring main body and the second eye portion is connected to the connection piece to be rotatable around a second axis extending in the width direction of the leaf spring main body. A central region of the leaf spring main body in the longitudinal direction supports an axle and the leaf spring main body is provided to be flexibly deformable upward.

The connection piece is connected to the vehicle body to be rotatable around a third axis extending in the width direction of the leaf spring main body. When the leaf spring main body is flexibly deformed upward, the connection piece rotates around the third axis in accordance with a change in size of the leaf spring main body in the longitudinal direction.

Regarding this type of the leaf spring device, there is a case where it is required that a spring constant realized by the leaf spring device is made low at an initial stage of a process in which the leaf spring main body is flexibly deformed upward and then the spring constant is made high when flexible deformation of the leaf spring main body progresses.

### [Citation List]

### [Patent Document]

[Patent Document 1]
Published Japanese Translation No. 2018-507809 of the PCT International Publication

### [Summary of Invention]

### [Technical Problem]

However, in such a leaf spring device, for example, the shape of the leaf spring main body needs to be changed to a specific shape as described in Patent Document 1 or another spring member needs to be newly provided at the leaf spring main body. In this case, it is difficult to suppress the weight, the cost, and the like of the leaf spring device.

The present invention has been made in consideration of such circumstances, and an objective of the present invention is to provide a leaf spring device capable of realizing, while suppressing the weight, the cost, and the like of the leaf spring device, making a spring constant realized by the leaf spring device low at an initial stage of a process in which a leaf spring main body is flexibly deformed upward and then making the spring constant high when flexible deformation of the leaf spring main body progresses.

### [Solution to Problem]

A leaf spring device according to one aspect of the present invention includes a leaf spring main body, a first eye portion provided at a first end portion of the leaf spring main body in a longitudinal direction, a second eye portion provided at a second end portion of the leaf spring main body in the longitudinal direction, and a connection piece connecting the second eye portion and a vehicle body to each other, the connection piece being formed to be elastically deformable in the longitudinal direction, in which the first eye portion is connected to the vehicle body to be rotatable around a first axis extending in a width direction of the leaf spring main body, the second eye portion is connected to the connection piece to be rotatable around a second axis extending in the width direction, a central region of the leaf spring main body in the longitudinal direction supports an axle, the leaf spring main body is provided to be flexibly deformable upward, and a connection portion of the leaf spring main body, at which the leaf spring main body is connected to the second eye portion, is urged by an elastic restoring force of the connection piece in a direction in which the connection portion is displaced along the longitudinal direction at an initial stage of a process in which the leaf spring main body is flexibly deformed upward.

The connection portion of the leaf spring main body, at which the leaf spring main body is connected to the second eye portion, is urged by the elastic restoring force of the connection piece in the direction (hereinafter, will be referred to as an initial movement direction) in which the connection portion is displaced along the longitudinal direction at the initial stage of the process in which the leaf spring main body is flexibly deformed upward.

Accordingly, in a process in which the leaf spring main body is flexibly deformed upward and the connection portion is displaced in the longitudinal direction, flexible deformation of the leaf spring main body is assisted by an urging force from the connection piece at an initial stage until amount of elastic displacement of the connection piece is decreased to cause an urging force applied from the connection piece to the connection portion in the initial movement direction to vanish. Thereafter, as the flexible deformation of the leaf spring main body progresses, elastic deformation of the connection piece followed by the deformation of the leaf spring main body newly starts, so that the connection portion is urged by the connection piece in a direction opposite to the direction of the displacement along the longitudinal direction.

Accordingly, a spring constant realized by the leaf spring device can be made low at the initial stage of the process in which the leaf spring main body is flexibly deformed upward, and then the spring constant can be made high when flexible deformation of the leaf spring main body progresses.

The above-described action and effect can be achieved without, for example, changing the shape of the leaf spring main body to a specific shape or newly providing another spring member at the leaf spring main body, and thus it is possible to suppress the weight, the cost, and the like of the leaf spring device. For example, in a case where the leaf spring main body is formed of fiber-reinforced resin or the like, it is not necessary to change a molding die, and thus the cost of the leaf spring device can be reliably suppressed.

The leaf spring device may further include an adjustment member that is connected to the vehicle body to be rotatable around a third axis extending in the width direction, a lower end portion of the connection piece may be connected to the second eye portion, an upper end portion of the connection piece may be fixed to the adjustment member, and a mechanism portion for upward and downward movement of the adjustment member around the third axis may be provided at a portion of the adjustment member that is separated from the third axis in the longitudinal direction.

When the adjustment member is moved upward and downward around the third axis by means of the mechanism portion, the upper end portion of the connection piece moves in accordance with the upward and downward movement, so that the connection piece and the leaf spring main body are elastically deformed. Accordingly, it is possible to easily adjust the amount and direction of elastic deformation of the connection piece such that the connection piece urges the connection portion in the initial movement direction.

For example, it is possible to adjust the amount and direction of elastic deformation of the connection piece by moving the adjustment member upward and downward around the third axis by means of the mechanism portion after the leaf spring device is assembled with a vehicle in a state where no load is applied to the connection piece.

The upper end portion of the connection piece may be formed in an annular shape and may be disposed to be coaxial with the third axis.

Since the upper end portion of the connection piece is disposed to be coaxial with the third axis, the connection piece is easily elastically deformed as the adjustment member moves upward and downward around the third axis, and thus it is possible to easily adjust the amount and direction of elastic deformation of the connection piece.

### [Advantageous Effects of Invention]

According to the present invention, it is possible to realize, while suppressing the weight, the cost, and the like of a leaf spring device, making a spring constant realized by the leaf spring device low at an initial stage of a process in which a leaf spring main body is flexibly deformed upward and then making the spring constant high when flexible deformation of the leaf spring main body progresses.

### [Brief Description of Drawings]

FIG. 1 is a side view showing a state where a leaf spring device of an embodiment is mounted onto a vehicle.
FIG. 2 is a view showing a state before elastic deformation of a connection piece in the leaf spring device of FIG. 1.
FIG. 3 is a view as seen along arrows of line III-III in FIG. 2.
FIG. 4 is a view as seen along arrows of line IV-IV in FIG. 2.

### [Description of Embodiments]

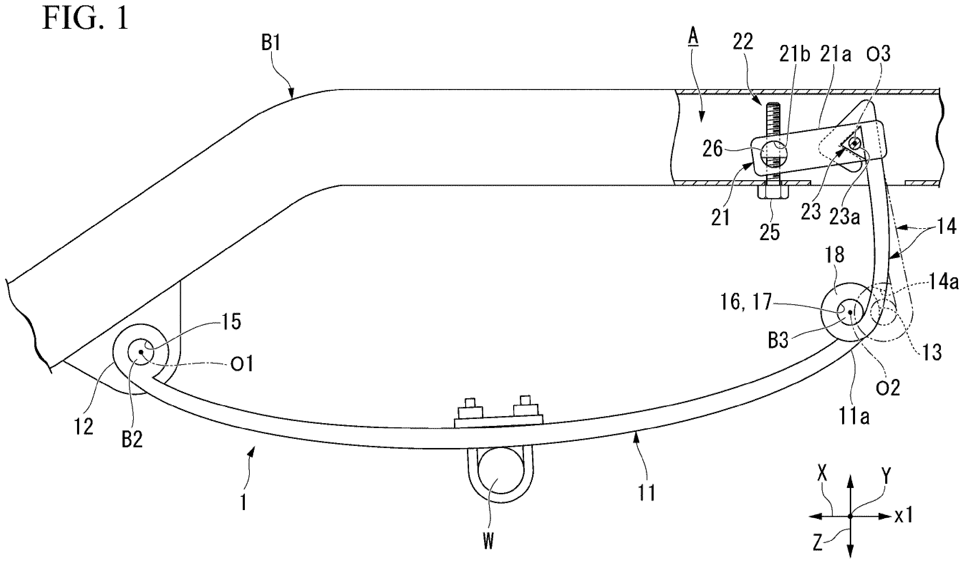

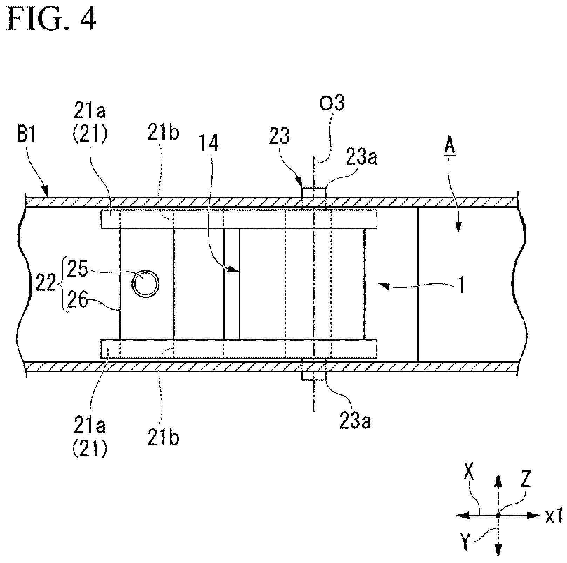

Hereinafter, an embodiment of a leaf spring device will be described with reference to FIG. 1 and FIG. 4.

A leaf spring device 1 of the present embodiment includes a leaf spring main body 11, a first eye portion 12, a second eye portion 13, and a connection piece 14.

The leaf spring device 1 is used by being assembled with a vehicle. In a state where a longitudinal direction X of the leaf spring main body 11 coincides with a front-rear direction of the vehicle, the central region of the leaf spring main body 11 in the longitudinal direction X supports an axle W. The first eye portion 12 is attached to a vehicle body B1, and the second eye portion 13 is attached to the vehicle body B1 via the connection piece 14.

The central region of the leaf spring main body 11 in the longitudinal direction X supports the axle W and the leaf spring main body 11 is provided to be flexibly deformable upward. Note that the leaf spring main body 11 may support the axle W from above or may support the axle W from below.

The leaf spring main body 11 is formed of, for example, fiber-reinforced resin. Examples of fibers contained in the fiber-reinforced resin include a glass fiber, a carbon fiber, and the like. In an example shown in the drawings, the leaf spring main body 11 is formed of fiber-reinforced resin containing glass fibers. The fibers are contained in the resin in a state of being substantially extended in the longitudinal direction X.

Note that the leaf spring main body 11 may be formed of metal or the like.

In a state where the leaf spring main body 11 is mounted onto a vehicle, the leaf spring main body 11 extends to become closer to an upper side toward outer end portions from the central region in the longitudinal direction X and is curved in a curved-surface shape protruding downward. At this time, the radius of curvature of the leaf spring main body 11 as seen in a width direction Y, which is orthogonal to a vertical direction Z and the longitudinal direction X, is larger than the radius of curvature of the leaf spring main body 11 before the mounting of the leaf spring main body 11 onto the vehicle.

Note that the leaf spring main body 11 may extend straight in the longitudinal direction X in a state where the leaf spring main body 11 is mounted onto the vehicle. The leaf spring main body 11 may extend to become closer to a lower side toward the outer end portions from the central region in the longitudinal direction X and be curved in a curved-surface shape protruding upward.

The first eye portion 12 is provided at a first end portion of the leaf spring main body 11 in the longitudinal direction X. The second eye portion 13 is provided at a second end portion of the leaf spring main body 11 in the longitudinal direction X. The first eye portion 12 and the second eye portion 13 are formed integrally with the leaf spring main body 11.

Note that the first eye portion 12 and the second eye portion 13 may be formed separately from the leaf spring main body 11.

A first fitting hole 15 that penetrates the first eye portion 12 in the width direction Y is formed in the first eye portion 12. A second fitting hole 16 that penetrates the second eye portion 13 in the width direction Y is formed in the second eye portion 13.

A first supporting shaft B2 fixed to the vehicle body B1 is fitted into the first fitting hole 15 to be relatively rotatable, so that the first eye portion 12 is connected to the vehicle body B1 to be rotatable around a first axis 01 extending in the width direction Y

The connection piece 14 connects the second eye portion 13 and the vehicle body B1 to each other.

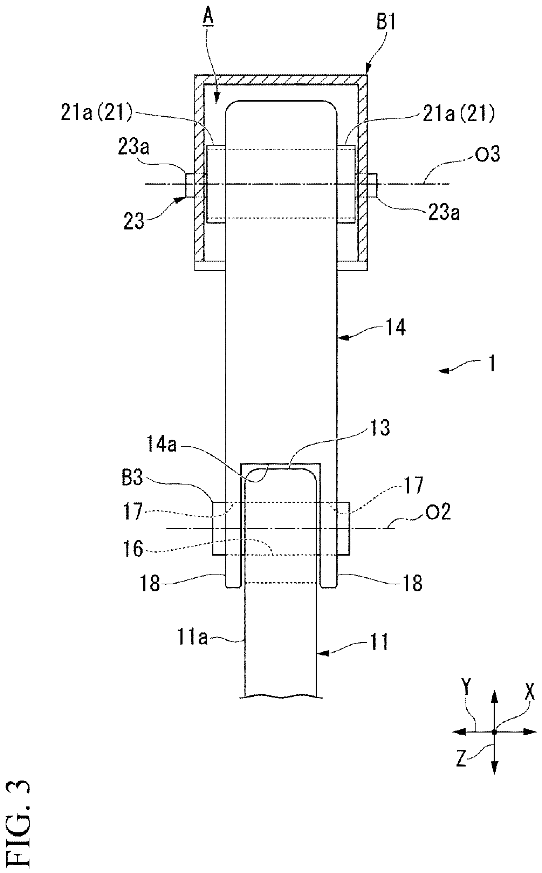

The connection piece 14 is formed in a shape like a plate of which front and rear surfaces face the longitudinal direction X. As shown in FIG. 3, the connection piece 14 has, as seen in the longitudinal direction X, a rectangular shape that is long in the vertical direction Z and short in the width direction Y The connection piece 14 is formed to be elastically deformable (bendable) in the longitudinal direction X.

A cutout portion 14a that penetrates the connection piece 14 in the longitudinal direction X and is open on the lower side is formed at a lower end portion of the connection piece 14. Third eye portions 18 are formed at both portions in the lower end portion of the connection piece 14 that are on opposite sides in the width direction Y with the cutout portion 14a interposed therebetween. The third eye portion 18 is formed by rounding the above-described portion of the cutout portion 14a to have a ring-like shape that protrudes to an inner side in the longitudinal direction X, which is the first eye portion 12 side in the longitudinal direction X. The third eye portion 18 includes a third fitting hole 17 that penetrates the third eye portion 18 in the width direction Y A second supporting shaft B3 is fitted into the third fitting holes 17 in a fixed state.

The second eye portion 13 of the leaf spring main body 11 is inserted into the cutout portion 14a of the connection piece 14 in a state of being positioned to be coaxial with the third eye portions 18. The second supporting shaft B3 fixed to the third fitting holes 17 is fitted into the second fitting hole 16 to be relatively rotatable, so that the second eye portion 13 is connected to the connection piece 14 to be rotatable around a second axis O2 extending in the width direction Y

Here, an adjustment member 21 that is connected to the vehicle body B 1 to be rotatable around a third axis O3 extending in the width direction Y, and a mechanism portion 22 for upward and downward movement of the adjustment member 21 around the third axis O3 are provided.

As shown in FIG. 4, the adjustment member 21 includes a pair of adjustment plates 21a that are provided at an interval in the width direction Y and of which the front and rear surfaces face the width direction Y The adjustment member 21 is provided in an internal space A of a frame of the vehicle body B1. An upper end portion of the connection piece 14 is inserted between the pair of adjustment plates 21a. The connection piece 14 protrudes downward from the internal space A of the frame of the vehicle body B1. The upper end portion of the connection piece 14 is formed in an annular shape and is disposed to be coaxial with the third axis O3. The upper end portion of the connection piece 14 is fixed to the adjustment member 21.

A fixation shaft 23 that penetrates both the adjustment member 21 and the upper end portion of the connection piece 14 in the width direction Y is provided. The fixation shaft 23 is disposed to be coaxial with the third axis O3. Each of both end portions 23a of the fixation shaft 23 in the width direction Y is formed in a columnar shape and is supported by the frame of the vehicle body B1 to be rotatable around the third axis O3.

The entire fixation shaft 23 excluding both end portions 23a in the width direction Y has a non-circular shape (a triangular shape in the example shown in the drawings) as seen in the width direction Y Fitting holes each having a non-circular shape as seen in the width direction Y are formed in the adjustment member 21. A portion of the fixation shaft 23 that has a non-circular shape as seen in the width direction Y is fitted into the fitting holes of the adjustment member 21 in a fixed state. An inner peripheral surface of the upper end portion of the connection piece 14 has a non-circular shape as seen in the width direction Y The portion of the fixation shaft 23 that has the non-circular shape as seen in the width direction Y is fitted into the upper end portion of the connection piece 14.

Since the portion of the fixation shaft 23 that has the non-circular shape as seen in the width direction Y is fitted into the fitting holes of the adjustment member 21 and into the upper end portion of the connection piece 14, the adjustment member 21, the upper end portion of the connection piece 14, and the fixation shaft 23 are restricted from relatively rotating around the third axis O3. In addition, when the leaf spring main body 11 is flexibly deformed upward, the connection piece 14 is elastically deformed (bent) in the longitudinal direction X in accordance with a change in size of the leaf spring main body 11 in the longitudinal direction X.

The mechanism portion 22 is provided at a portion of the adjustment member 21 that is separated from the third axis O3 in the longitudinal direction X. In the example shown in the drawings, the mechanism portion 22 is separated from the third axis O3 while being closer to the inner side in the longitudinal direction X than the third axis O3 is. Note that the mechanism portion 22 may be separated from the third axis O3 while being closer to an outer side in the longitudinal direction X than the third axis O3 is.

The mechanism portion 22 includes a bolt 25 and a female screw member 26.

The female screw member 26 is formed in a rectangular parallelepiped shape that is long in the width direction Y The female screw member 26 has an upper-half semicircular shape as seen in the width direction Y As seen in the width direction Y, the female screw member 26 is defined by a flat lower surface that faces the lower side and a semicircular arc-shaped surface that protrudes upward. A through-hole 21b penetrating the adjustment plate 21a in the width direction Y is formed in each of the pair of adjustment plates 21a. Both end portions of the semicircular arc-shaped surface of the female screw member 26 in the width direction Y are fitted into the through-holes 21b of the pair of adjustment plates 21a such that the end portions can be slid around the central axis of the through-holes 21b. A screw hole penetrating the female screw member 26 in the vertical direction Z is formed in the female screw member 26, and the bolt 25 is screwed into the screw hole. A head portion of the bolt 25 abuts a lower surface of the frame of the vehicle body B1.

A connection portion 11a of the leaf spring main body 11, at which the leaf spring main body 11 is connected to the second eye portion 13, is urged by an elastic restoring force of the connection piece 14. In the present embodiment, at an initial stage of a process in which the leaf spring main body 11 is flexibly deformed upward, the connection portion 11a is urged by the elastic restoring force of the connection piece 14 in a direction (hereinafter, will be referred to as an initial movement direction) x1 in which the connection portion 11a is displaced along the longitudinal direction X.

In the example shown in the drawings, the initial movement direction x1 is a direction toward the outer side (a right side) in the longitudinal direction X. In addition, in the process in which the leaf spring main body 11 is flexibly deformed upward, the connection portion 11a moves in the initial movement direction x1 until the leaf spring main body 11 is made straight in the longitudinal direction X. When the leaf spring main body 11 is curved to have a curved-surface shape that protrudes upward, that is, when a protruding portion of the leaf spring main body 11 is turned upside down, the connection portion 11a is moved in a direction opposite to the initial movement direction x1 along the longitudinal direction X. At this time, the connection portion 11a is urged in the initial movement direction x 1 by the elastic restoring force of the connection piece 14.

Note that in a case where, in a state where the leaf spring main body 11 is mounted onto the vehicle, the leaf spring main body 11 extends straight in the longitudinal direction X at an initial stage and in a case where the leaf spring main body 11 extends to become closer to the lower side toward the outer end portions from the central region in the longitudinal direction X and is curved in a curved-surface shape protruding upward, a direction in which the connection portion 11a is displaced along the longitudinal direction X in a process in which the leaf spring main body 11 is flexibly deformed upward is always an inward (leftward) direction.

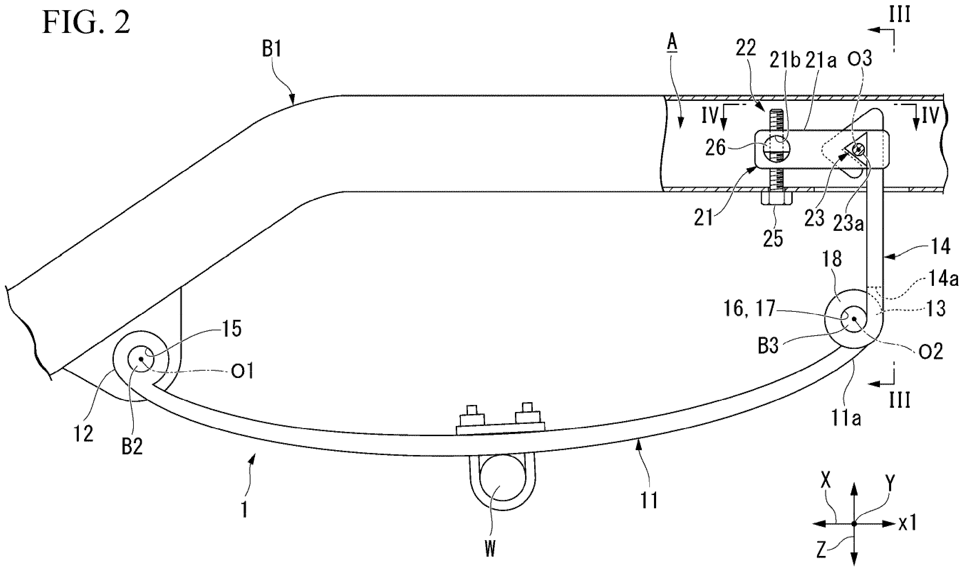

As shown in FIG. 2, the leaf spring device 1 is assembled with the vehicle in a state where no load is applied to the connection piece 14. Thereafter, as the head portion of the bolt 25 is pinched and the bolt 25 is rotated relative to the female screw member 26 such that the female screw member 26 is lowered, as shown in FIG. 1, the adjustment member 21 is lowered around the third axis O3 by the female screw member 26. Accordingly, a force that rotates the upper end portion of the connection piece 14 around the third axis O3 in a counterclockwise direction (the direction opposite to the initial movement direction x1) as seen in the width direction Y is applied to the connection piece 14 and the connection piece 14 becomes about to move in the initial movement direction x1 as represented by a two-dot chain line in FIG. 1.

At this time, the third eye portions 18 of the connection piece 14 are connected to the leaf spring main body 11 via the second supporting shaft B3 and the second eye portion 13. Therefore, as represented by a solid line in FIG. 1, the connection piece 14 is restrained from moving in the initial movement direction x1, and the connection piece 14 is elastically deformed in the direction opposite to the initial movement direction x1. Accordingly, the connection portion 11a of the leaf spring main body 11, at which the leaf spring main body 11 is connected to the second eye portion 13, is urged in the initial movement direction x1 by the elastic restoring force of the connection piece 14.

As described above, according to the leaf spring device 1 of the present embodiment, in a process in which the leaf spring main body 11 is flexibly deformed upward and the connection portion 11a is displaced in the longitudinal direction X, flexible deformation of the leaf spring main body 11 is assisted by an urging force from the connection piece 14 at an initial stage until amount of elastic displacement of the connection piece 14 is decreased to cause an urging force applied from the connection piece 14 to the connection portion 11a in the initial movement direction to vanish, that is, until the connection piece 14 is deformed into a shape represented by the two-dot chain line in FIG. 1 in the example shown in the drawings. Thereafter, as the flexible deformation of the leaf spring main body 11 progresses, elastic deformation of the connection piece 14 followed by the deformation of the leaf spring main body 11 newly starts, so that the connection portion 11a is urged by the connection piece 14 in a direction opposite to the direction of the displacement along the longitudinal direction X. Note that a stage until amount of elastic displacement of the connection piece 14 is decreased to cause the urging force applied from the connection piece 14 to the connection portion 11a in the initial movement direction to vanish may be referred to as a first stage of the above-described process. A stage after the first stage in which the flexible deformation of the leaf spring main body 11 progresses may be referred to as a second stage of the above-described process. That is, in the first stage of the above-described process, the flexible deformation of the leaf spring main body 11 is assisted by an urging force from the connection piece 14, and in the second stage of the above-described process, the connection portion 11a is urged by the connection piece 14 in the direction opposite to the direction of the displacement along the longitudinal direction X.

Accordingly, a spring constant realized by the leaf spring device 1 can be made low at an initial stage (the first stage of the above-described process) of a process in which the leaf spring main body 11 is flexibly deformed upward, and then the spring constant can be made high when flexible deformation of the leaf spring main body 11 progresses (the second stage of the above-described process).

The above-described action and effect can be achieved without, for example, changing the shape of the leaf spring main body 11 to a specific shape or newly providing another spring member at the leaf spring main body 11, and thus it is possible to suppress the weight, the cost, and the like of the leaf spring device 1. For example, in a case where the leaf spring main body 11 is formed of fiber-reinforced resin or the like, it is not necessary to change a molding die, and thus the cost of the leaf spring device 1 can be reliably suppressed.

When the adjustment member 21 is moved upward and downward around the third axis O3 by means of the mechanism portion 22, the upper end portion of the connection piece 14 moves in accordance with the upward and downward movement, so that the connection piece 14 and the leaf spring main body 11 are elastically deformed. Accordingly, it is possible to easily adjust the amount and direction of elastic deformation of the connection piece 14 such that the connection piece 14 urges the connection portion 11a in the initial movement direction x1.

For example, it is possible to adjust the amount and direction of elastic deformation of the connection piece 14 by moving the adjustment member 21 upward and downward around the third axis O3 by means of the mechanism portion 22 after the leaf spring device 1 is assembled with the vehicle in a state where no load is applied to the connection piece 14.

Since the upper end portion of the connection piece 14 is disposed to be coaxial with the third axis O3, the connection piece 14 is easily elastically deformed as the adjustment member 21 moves upward and downward around the third axis O3, and thus it is possible to easily adjust the amount and direction of elastic deformation of the connection piece 14.

The technical scope of the present invention is not limited to the above-described embodiments, and various modifications can be made within the scope not departing from the meaning of the present invention.

For example, the adjustment member 21 and the mechanism portion 22 may be omitted.

The upper end portion of the connection piece 14 may not be formed in an annular shape, and may be provided to be separated from the third axis O3.

Here, a method of adjusting the amount and direction of elastic deformation of the connection piece 14 in a case where the connection portion 11a moves inward in the longitudinal direction X in a process in which the leaf spring main body 11 is flexibly deformed upward will be described. Cases where the connection portion 11a moves inward in the longitudinal direction X in a process in which the leaf spring main body 11 is flexibly deformed upward include a case where, in a state where the leaf spring main body 11 is mounted onto the vehicle, the leaf spring main body 11 extends straight in the longitudinal direction X at an initial stage and a case where the leaf spring main body 11 extends to become closer to the lower side toward the outer end portions from the central region in the longitudinal direction X and is curved in a curved-surface shape protruding upward.

First, the female screw member 26 is raised by means of the bolt 25 and the adjustment member 21 is raised around the third axis O3 by means of the female screw member 26. Accordingly, a force in a clockwise direction around the third axis O3 as seen in the width direction Y, which is a direction shown in FIGS. 1 and 2, is applied to the upper end portion of the connection piece 14, so that the connection piece 14 is caused to move inward (leftward) in the longitudinal direction X.

At this time, the third eye portions 18 of the connection piece 14 are connected to the leaf spring main body 11 via the second supporting shaft B3 and the second eye portion 13. Therefore, the connection piece 14 is restrained from moving inward in the longitudinal direction X, and the connection piece 14 is elastically deformed outward in the longitudinal direction X. Accordingly, the connection portion 11a is urged inward in the longitudinal direction X by the elastic restoring force of the connection piece 14.

Furthermore, the components in the above-described embodiments can be appropriately replaced with well-known components within a range not departing from the meaning of the present invention, and the embodiments and modified examples described above may be appropriately combined.

### [Industrial Applicability]

According to the present invention, it is possible to realize, while suppressing the weight, the cost, and the like of a leaf spring device, making a spring constant realized by the leaf spring device low at an initial stage of a process in which a leaf spring main body is flexibly deformed upward and then making the spring constant high when flexible deformation of the leaf spring main body progresses.

### [Reference Signs List]

1: Leaf spring device
11: Leaf spring main body
11a: Connection portion
12: First eye portion
13: Second eye portion
14: Connection piece
21: Adjustment member
22: Mechanism portion
B1: Vehicle body
01: First axis
O2: Second axis
O3: Third axis
W: Axle
X: Longitudinal direction
Y: Width direction
Z: Vertical direction

## Claims

1. A leaf spring device comprising:
a leaf spring main body;
a first eye portion provided at a first end portion of the leaf spring main body in a longitudinal direction;
a second eye portion provided at a second end portion of the leaf spring main body in the longitudinal direction; and
a connection piece connecting the second eye portion and a vehicle body to each other, the connection piece being formed to be elastically deformable in the longitudinal direction,
wherein the first eye portion is connected to the vehicle body to be rotatable around a first axis extending in a width direction of the leaf spring main body,
the second eye portion is connected to the connection piece to be rotatable around a second axis extending in the width direction,
a central region of the leaf spring main body in the longitudinal direction supports an axle,
the leaf spring main body is provided to be flexibly deformable upward, and
a connection portion of the leaf spring main body, at which the leaf spring main body is connected to the second eye portion, is urged by an elastic restoring force of the connection piece in a direction in which the connection portion is displaced along the longitudinal direction at an initial stage of a process in which the leaf spring main body is flexibly deformed upward.

2. The leaf spring device according to Claim 1, further comprising:
an adjustment member that is connected to the vehicle body to be rotatable around a third axis extending in the width direction,
wherein a lower end portion of the connection piece is connected to the second eye portion,
an upper end portion of the connection piece is fixed to the adjustment member, and
a mechanism portion for upward and downward movement of the adjustment member around the third axis is provided at a portion of the adjustment member that is separated from the third axis in the longitudinal direction.

3. The leaf spring device according to Claim 2,
wherein the upper end portion of the connection piece is formed in an annular shape and is disposed to be coaxial with the third axis.
